# EUROPEAN PATENT SPECIFICATION

(11) **EP 4 194 417 B1**
(45) Date of publication and mention of the grant of the patent: **23.04.2025**
(21) Application number: 23160426.5
(22) Date of filing: 07.03.2023
(51) Int. Cl.: C04B 7/43, C04B 20/04, C04B 28/02, C04B 28/04, C04B 28/06

(54) **METHOD FOR MANUFACTURING COMPOSITE CEMENT**
VERFAHREN ZUR HERSTELLUNG VON VERBUNDZEMENT
PROCÉDÉ DE FABRICATION DE CIMENT COMPOSITE

(43) Date of publication of application: 14.06.2023
(73) Proprietor: Kartuli Cement LLC, 0160 Tbilisi (GE)
(72) Inventor: SADUNISHVILI, Zaal, 0160 Tbilisi (GE); KITRIASHVILI, Mikheil, 0160 Tbilisi (GE); ADUASHVILI, Zakaria, 0160 Tbilisi (GE); ROBAKIDZE, Teona, 0160 Tbilisi (GE); GURASPASHVILI, Giorgi, 0160 Tbilisi (GE); MENABDISHVILI, Zurab, 0160 Tbilisi (GE); JAVAKHISHVILI, Ivane, 0160 Tbilisi (GE); CHKHEIDZE, Vakhtang, 0160 Tbilisi (GE); GOCHITASHVILI, Kakha, 0160 Tbilisi (GE); KESAURI, Neli, 0160 Tbilisi (GE)
(74) Representative: Sommer, Peter

(56) References cited:
- CN-A- 1 065 445
- US-A- 4 078 882
- FLOREZ CRISTIAN ET AL: "Effects of calcination and milling pre-treatments on natural zeolites as a supplementary cementitious material", CONSTRUCTION AND BUILDING MATERIALS, ELSEVIER, NETHERLANDS, vol. 310, 16 October 2021 (2021-10-16), XP086848589, ISSN: 0950-0618, [retrieved on 20211016], DOI: 10.1016/J.CONBUILDMAT.2021.125220

## Description

The present invention relates to a method for manufacturing composite cement in line with the pre-amble of claim 1.

Cement is one of the most widely used products in construction. The cement industry is struggling with high CO2 emissions related to the production of cement clinker. A major part of the CO2 emissions related to the clinker production originates from the raw materials used, i.e., from limestone. As environmentally friendlier alternatives to limestone do not exist at large enough scale, reduction of the raw material emissions by limestone substitution is not possible. Thus, reducing the requirement of natural resources in manufacturing cement, both mineral raw materials and fuels, has been a target for decades. Exchanging raw materials and fuels with waste and by-products is especially beneficial as is the use of such materials instead of cement clinker, i.e., as supplementary cementitious material (abbreviated SCM herein).

Unfortunately, reduction of cement and concrete industry environmental footprint by utilization of industrial waste and by-products as SCM for clinker replacement has reached global availability limits of useful materials (fly ashes and granulated blast furnace slag). By no means all by-products and waste products are suitable as SCM. The pozzolanic or latent hydraulic reactivity may not be too low, as otherwise the properties of the building material created from the cement and SCM will be negatively impacted. The availability of the two most important SCM - fly ashes and blast furnace slags - is expected to decrease with the progressing decarbonation of the electricity sector and increased steel recycling, respectively. As a result, it is an object to provide alternative SCM.

Widely available and accepted materials are limestone, clay, and recycled concrete fines. The suitable amount of limestone is limited, since it does not comprise reactive silicate and/or aluminate phases. Clay is abundant and shows high reactivity when suitably calcined, but only specific qualities are easily used. Those high-quality clays have other beneficial uses with which the manufacturing of composite cement would compete. Recycled concrete fines can be very reactive and are about to be included in the standard, but their use is complicated due to their very variable composition.

Another option are natural pozzolans. To be useful they need to contribute to cement hardening, usually by a chemical reaction of the phases in the SCM with hydration products of OPC-clinker and water. Natural pozzolans often show relatively low reactivity and individual phases comprised in them can have very different reactivity. Further, the availability of sufficiently reactive natural pozzolans is differing from location to location. A transportation over long distances is undesirable, since the benefit of using SCM is rapidly overbalanced by transportation cost and the associated CO2 emissions. Thus, known reactive natural pozzolans cannot solve the above object.

At some locations zeolites are abundant. Zeolites are aluminosilicates mainly consisting of silicon, aluminum, and oxygen accommodating a wide variety of cations, such as Na<+>, K<+>, Ca<2+>, Mg<2+> and others. Since these positive ions are often loosely held and can readily be exchanged for others they are well known as ion exchange materials. Zeolites have microporous structures with a typical diameter of 0.3 - 0.8 nm which renders them useful as molecular sieves. The Si/AI molar ratio is normally greater than 1. Natural zeolites usually have Si/AI molar ratios below about 3. Some of the more common mineral zeolites are analcime, chabazite, clinoptilolite, heulandite, natrolite, phillipsite, and stilbite. Natural zeolites form by reaction of volcanic rocks and ash layers with alkaline groundwater. Zeolites also crystallize in post-depositional environments like in shallow marine basins over periods ranging from thousands to millions of years. Naturally occurring zeolites are rarely pure and are contaminated to varying degrees by other minerals, for example by quartz or other zeolites. Other impurities like metals are also frequently found. Therefore, natural zeolites are seldom useful as ion exchange material or molecular sieve without extensive treatment and synthetic zeolites are provided for these uses. The use of natural zeolites as SCM in composite cements is possible because neither a mixture of various zeolites nor the presence of further minerals interferes with this. But the high surface area of zeolites causing inter alia a high water demand is a considerable drawback. Thus, they have only been used in low amounts so far.

As is known for clay and oil shale, the phases of natural pozzolans can sometimes be transformed to metastable and thus reactive phases by calcination, i.e., a heat treatment changing crystalline and/or chemical structure. However, such heat treatment has the drawback of requiring allocated resources, like heat-supply and material handling. It consumes fuel thereby releasing CO2. The calcination of clay is also quite complicated when several clay phases with differing optimum calcination temperature are present. Proposals for improved clay calcination processes are found e.g., in EP 2 253 600 A1 , US 5,626,665 A, WO 2016/082936 A1 , WO 2021 /124261 A1 , and not prior published EP 21198584.1 , as well as in EP 3 070 064 B1 and WO 2022/106966 A1 . The latter two proposals rely on a calcination of the clay inside the clinker cooler. To achieve this, a double-inlet valve and specific compositions of the so-called low carbon cement made are described as necessary.

US 4 078 882 A discloses a method for burning pulverous or granular raw material such as cement raw meal in a rotary kiln plant by directing a first flow of raw material to a cyclone preheater, preheating the first flow of raw material in the cyclone preheater, and directing the preheated raw material from the cyclone preheater to a rotary kiln for burning the material in the kiln. The burnt kiln product is directed to a cooler which may be of several types and which communicates with the material outlet of the kiln while a second flow of fresh raw material is directed to the cooler to at least partially cool the burnt kiln product by transferring heat therefrom to the second flow of fresh raw material in the cooler. The method further involves combining the preheated, at least partially calcined second flow of material with the first flow of preheated, at least partially calcined material prior to directing the combined flows to the rotary kiln and thereafter directing the combined flows to the kiln for burning and for subsequent cooling in the cooler.

CN 1 065 445 A discloses a method for improving Portland cement production quality, reducing energy consumption, and reducing smoke and dust, with calcining atmosphere of a kiln and using perlite and zeolite to replace part of the clay.

Florez Cristian et al conclude in the article with the title "Effects of calcination and milling pre-treatments on natural zeolites as a supplementary cementitious material", published in Construction And Building Materials, Elsevier, Netherlands, vol. 310, research, that calcination at 300 °C and 800 °C managed to tenuous improve the pozzolanic activity of NZ, although calcination at 300 °C is comparable to that of zeolite in its natural state, calcination at 800 °C subtly increased the pozzolanic activity of zeolites.

It is the object of the present invention to further develop the known method according to the pre-amble of claim 1 to overcome the drawbacks of the prior art.

This object is solved by the features of the characterizing portion of claim 1. Further preferred embodiments of the method according to the present invention are described in claims 2 to 11.

Surprisingly, it was now found that zeolites can be activated by adding them to the clinker cooler with a simple gas tight valve when the point of addition is adjusted so that the added zeolite is heated to a temperature in the range from 600 to 800 °C. For sufficient activation, also heat-transfer by duration of exposure to this temperature is required, which is provided by the time the clinker and added zeolite travel through the cooler between the point of addition and the cooler exit. Calcined zeolite was not usual before the present invention was made, instead, zeolite was merely dried before mixing with the cement or cement clinker.

Thus, the above problem is solved by a method for manufacturing a composite cement comprising the steps:
providing a cement raw meal, preheating the cement raw meal to provide preheated cement raw meal, precalcination of the preheated cement raw meal to provide precalcined cement raw meal, sintering the precalcined cement raw meal in a rotary kiln to provide the cement clinker, and cooling the cement clinker in a cooler, wherein a zeolite is added with a gas tight valve to the clinker in the cooler at a position where the temperature of the clinker causes a heating of the added zeolite to a temperature in the range from 600 to 800 °C. Thus, a composite cement is obtained by providing a cement raw meal, preheating the cement raw meal to provide preheated cement raw meal, precalcination of the preheated cement raw meal to provide precalcined cement raw meal, sintering the precalcined cement raw meal in a rotary kiln to provide the cement clinker, and cooling the cement clinker in a cooler, wherein a zeolite is added with a gas tight valve to the clinker in the cooler at a position where the temperature of the clinker causes a heating of the added zeolite to a temperature in the range from 600 to 800 °C, and grinding the cooled clinker and zeolite.

The present invention relies on the heat released by the clinker in the clinker cooler of a rotary kiln. The zeolite is typically fed approximately to the center of the clinker cooler. From the top of the cooler-roof the zeolite is falling onto the hot clinker. The energy for calcining the zeolite is provided by the high temperature of the clinker. By radiation from the clinker bed the heat is transferred from the clinker to the zeolite. At the same time by the airflow through the clinker bed the clinker is cooling.

Thereby, neither an additional device nor fuel are needed to calcine the zeolite. The calcination at a temperature in the range from 600 to 800 °C results in an activated material having a reduced BET surface area (determined according to ISO 9277:2022 and based on the analysis of isotherm data by a method developed by Brunauer, Emmett and Teller) with changes in crystallography, especially an increase in content of X-ray amorphous phase/phases. This can reduce water demand, and/or result in a shorter setting time, and/or enable a lower mortar spread and/or provide a faster strength development when compared to using a merely dried zeolite.

All zeolites as described above and especially also mixtures of two or more of them and/or zeolites containing a considerable amount of other mineral phases are suitable according to the invention. The zeolites can be used as obtained from the quarry or subjected to a pretreatment before being added to the cooler.

Other aluminosilicate materials can be calcined in the same way, optionally at another temperature range when such is optimum for the specific aluminosilicate. For example, clay (materials containing a significant amount (e.g., 20 wt.-% or 30 wt.-% or 50 wt.-% or more) of clay minerals like such from the kaolin group, smectite group and/or illite group, specifically but not limited to the following: kaolinite, dickite, halloysite, nacrite, montmorillonite, nontronite, beidellite, saponite, illite, palygorskite, sepiolite) can be added and calcined at a temperature from 400 to 950 °C, preferably 600 to 850 °C. Also, other pozzolans such as but not limited to trass, diatomite, perlite, pumice, tuff, hyaloclastite, lava sand etc. are expected to benefit in the same way as zeolites. In the following, only zeolite is described in detail, but other aluminosilicate material can be calcined and form composite cements in the same way or analogously to zeolites.

Advantageously, the size of the zeolite is adjusted to a D90 of 100 mm, preferably a D90 of 50 mm, most preferred a D90 of 30 mm. Often, the particles obtained from the quarry already have this size. If not, the size can be reduced by crushing and/or grinding, combined with sieving and/or classifying when desired. It is not worthwhile to provide the zeolite with a D10 below 1 mm because the calcined zeolite will be ground together with the cement clinker anyway. Handling is also more complicated for smaller particle sizes. Therefore, the D10 is preferably at least 1 mm, more preferred at least 5 mm, and most preferred at least 10 mm. Particle sizes in this range are determined by sieving as is usual.

Preferred zeolites mainly comprise zeolite phases like analcime, chabazite, clinoptilolite, heulandite, natrolite, phillipsite, and stilbite or mixtures of two or more thereof. Typically, the Si/AI molar ratio is below about 3, preferably from 1 to 3. The zeolites can comprise other mineral phases, e.g., quartz, feldspar, clay minerals, mica and calcite, and also impurities like metals. The amount of such non-zeolite components is preferably below 60 wt.-%, more preferred below 55 wt.-% and most preferred below 50 wt.-% with respect to the total zeolite material added.

The cement clinker manufacturing steps correspond to the usual steps and the common devices used in manufacturing of any kind of Portland cement clinker, calcium aluminate clinker, calcium sulfoaluminate clinker and calcium sulfoaluminate belite clinker are used.

Also, one of ordinary skill in the art is acquainted with suitable conditions to carry out the steps for clinker manufacturing of the method according to the invention. Therefore, devices and conditions will be only briefly described herein. In fact, it is one advantage of the present invention that an existing cement manufacturing line can easily be retrofitted with the zeolite addition to convert it into a device for manufacturing composite cement according to the invention.

As usual, cement raw meal is provided in a first step for the cement manufacturing. Typically, cement raw materials are ground and mixed as well as dried when necessary to obtain the cement raw meal. Mix design and particle sizes are adjusted as usual. Exhaust gas from the cement clinker production process (kiln) is usually used for drying cement raw materials within the grinding process.

The cement raw meal is then preheated, usually in counter current flow with exhaust gas from the cement clinker kiln. A useful preheating section comprises at least two, often three or four, cyclones. The preheating is often coupled with a calcination to decarbonate a substantial amount of the calcium carbonate in the preheated cement clinker raw meal. Typically, decarbonation is not complete, a minor amount of the carbonate is only decarbonated in the kiln. Usually, the calciner receives preheated raw meal and gas which is heated by a calciner burner and/or in a separate burning chamber connected to the calciner. The burning process in the calciner can take place with conventional fossil fuels like gas, petroleum, and coal. It also works with alternative fuels like combustible municipal, industrial and commercial waste, refuse-derived fuels, and biomass. The preheated and subsequently precalcined cement clinker raw meal typically comprises from a few percent, e.g., from 1 to 5 wt.-%, up to 30 or 40 wt.-% carbonate.

The precalcined cement raw meal is fed to the kiln, normally a rotary kiln, as usual. It is also possible to feed the preheated raw meal to the kiln and accomplish the complete decarbonation in the kiln. Inside the kiln the raw meal is sintered to provide the cement clinker. The kiln burner can work with fossil fuels and/or with alternative fuels. Using at least partly alternative fuels is preferred. The combustion air for the kiln burner comes from the cement clinker cooler as known per se.

The obtained cement clinker passes from the kiln to the cooler where it is cooled down, typically with a counter current air stream. All known cooler types are useful, preferred are grate coolers. A part of the air heated up during cement clinker cooling is normally used as a first combustion air for sintering cement clinker raw meal in the kiln. Another part (called tertiary air) may be guided directly into the cement clinker raw meal calciner or is used otherwise, e.g., for drying cement clinker raw materials, also as usual.

The clinker is arriving to the cooler downstream from the kiln. The zeolite is arriving from the top of the cooler. Both material streams are combined in the cooler. Further, the materials continue to travel as blend via the remaining of the cooler to the clinker storage. There is no separation of the materials downstream. Hence, there are no resources for separate material handling required.

Feeding and dosage of the zeolite are advantageously accomplished by a transport device with mass flow sensor, especially with a belt weigh feeder, and the gas tight valve. The zeolite is usually provided in a silo, buffer hopper or any other storage unit able to discharge the zeolite as desired. A prior drying of the zeolite is possible but normally superfluous. The particle size can be adjusted if necessary, as described before. The preferred belt weigh feeder transports the selected amount of zeolite to a gas tight valve. The valve allows an addition to the cooler without any hot air escaping. According to the present invention, the valve has two flaps of which only one is open at a time. While the upper flap is open, zeolite enters the valve. After closing the upper flap, the lower one opens, and the zeolite falls down onto the clinker travelling in the cooler. Then, the lower flap closes, and the cycle is repeated. Contrary to what EP 3 070 064 B1 and WO 2022/106966 A1 describe, it is not necessary and in fact overly complicated to use a double inlet valve requiring two valve chambers. Due to the fast operating of a simple gas tight valve, it is not necessary to have two dispensing chambers of which one opens when the other closes.

The point of addition is chosen such that the clinker comprises sufficient heat to calcine the added zeolite at a temperature from 600 to 800 °C. Usually, this point is at about the middle of the cooler. When higher amounts of zeolite are added and/or a temperature at the higher end (e.g., 700 to 800 °C) is desired, the point is nearer to the kiln. In case a lower amount of zeolite is added and/or calcination shall take place at the lower end of the temperature range (e.g., 600 to 700 °C) an addition nearer the cooler exit is appropriate.

Typically, amounts of zeolite ranging from 1 to 60 wt.-% with respect to the clinker weight, preferably from 5 to 30 wt.-%, most preferred from, 7 to 15 wt.-%, for example about 10 wt.-%, are added. The amount is limited by the specific heat carriage by the clinker and adjusted to assure sufficient thermal treatment of the zeolite.

The calcination of the zeolite provides a supplementary cementitious material with a reduced BET surface area. Preferably, a reduction of the surface area of the zeolite of at least 5 %, more preferred of at least 10 % and most preferred of at least 15 % of the surface area is aimed at. The calcination further provides a change in crystallography, mainly an increase in X-ray amorphous phase or phases. Without wishing to be bound by this theory it is hypothesized that those effects result in the improved reactivity compared to the merely dried zeolite used before.

The clinker exits the cooler intimately mixed with the added zeolite. Both have cooled down to a temperature in the range from ambient to 200 °C when they leave the cooler. As known per se, the clinker (and with it the calciner zeolite) is ground to the desired fineness to obtain the composite cement. The grinding can be carried out in any known device such as but not limited to a ball mill. As is customary, a classifier can be used. Further, the grinding can take place in a two-stage mill. The fineness of the ground mixture obtained preferably ranges from 2500 cm²/g to 8000 cm²/g, more preferred from 3000 cm²/g to 7000 cm²/g and most preferred from 3500 cm²/g to 6000 cm²/g according to Blaine (determined according to EN 196-6:2018).

Preferably, an amine grinding aid is added for grinding. Preferred substances are diisopropanolamine, methyldiethanolamine, triethanolamine, triisopropanolamine, and diethanol-isopropanolamine, most preferred are triethanolamine, triisopropanolamine, and diethanol-isopropanolamine. These can also be added to improve reactivity of the activated zeolite even further.

The cement clinker is preferably selected from Portland cement clinker, calcium sulfoaluminate cement clinker, and calcium aluminate cement clinker. Especially preferred is Portland cement clinker.

The composite cement obtained by the method according to the invention, can also contain other components. Typically, a sulfate carrier such as gypsum or anhydrite is added to obtain Portland composite cement.

In a preferred embodiment, the composite cement contains from 1 to 30 wt.-%, preferably from 5 to 25 wt.-%, more preferred from 10 to 20 wt.-%, most preferred from 12 to 17 wt.-% mineral filler with respect to the total composite cement weight. A preferred mineral filler is stone dust, especially limestone. Carbonated recycled concrete fines, dolomite, precipitated calcium and/or magnesium carbonate are also possible. The filler can be co-ground with the clinker and zeolite (and possibly also one or more further components) or ground separately. Preferably it is ground separately. Some fillers do not need grinding since they are fine enough as obtained. The fineness according to Blaine of the filler preferably ranges from 2500 cm²/g to 12000 cm²/g, more preferred from 3000 cm²/g to 9000 cm²/g, and most preferred from 3500 cm²/g to 8000 cm²/g.

Further optional components of the composite cement are other SCM such as but not limited to fly ash, GGBFS (ground granulated blast furnace slag), carbonated recycled concrete fines, calcined clay, hyaloclastite, and mixtures of two or more thereof. If used they are typically contained in the amounts allowed by the applicable standard, e.g., EN 197-1 or EN 197-5.

The composite cement can also comprise additives such as but not limited to pigments, polymers, fibers, reinforcing elements, self-healing agents etc. and mixtures of two or more thereof. All these can be added in the amounts known per se.

The composite cement can also comprise admixtures, although admixtures are usually only added to the building material made with the cement, e.g., to a concrete, mortar, or construction chemical composition. The mode of addition also depends on whether an admixture is a dry substance or provided as a solution or suspension. A solution or suspension in water is mostly added to the building material and not to the cement.

Admixtures are used to optimize the properties like setting time, hardening time, spread, viscosity and homogeneity as well as to impart desired properties to the final concrete part like strength, flexural modulus, freeze-thaw-resistance and many more. These admixtures are known per se and are used in their usual amounts, wherein the amount is adapted to a specific binder and special needs in the known manner.

For use, the composite cement is made e.g., into mortar or concrete by mixing with water. Typically, a water/cement weight ratio (w/c) from 1 to 0.1, preferably from 0.75 to 0.15, and most preferred from 0.65 to 0.35 is used. The zeolite and one or more optional additional SCMs are included into the amount of cement for calculating the w/c.

The building material, e.g., mortar or concrete, usually also contains aggregates. Aggregate can be any aggregate known as such. Normally sand and/or gravel of selected particle sizes is/are used. In some cases, lightweight aggregate is used, typically as part of the aggregate but also as sole aggregate.

The invention will be illustrated further with reference to the examples that follow, without restricting the scope to the specific embodiments described. The invention includes all combinations of described and especially of preferred features that do not exclude each other. If not otherwise specified any amount in % or parts is by weight and in the case of doubt referring to the total weight of the composition/mixture concerned. A characterization as "approximately", "around" and similar expression in relation to a numerical value means that up to 10 % higher and lower values are included, preferably up to 5 % higher and lower values, and in any case at least up to 1 % higher and lower values, the exact value being the most preferred value or limit. The term "substantially free" means that a particular material is not purposefully added to a composition and is only present in trace amounts or as an impurity. As used herein, unless indicated otherwise, the term "free from" means that a composition does not comprise a particular material, i.e., the composition comprises 0 weight percent of such material.

### Example 1

Zeolite with the properties shown in table 1 was obtained with particle sizes from 0 to 30 mm. It was calcined at temperatures of 400 °C, 600 °C, 800 °C and 900 °C and then cooled in air. The same zeolite only dried at 105 °C was provided as comparison. The properties of the calcined zeolites are also listed in table 1.

**Table 1**

| Property | Dried at 105 °C | 400 °C | 600 °C | 800 °C | 900 °C |
|---|---|---|---|---|---|
| surface area acc. to BET [m²/g] | 18.16 | 18.71 | 14.95 | 6.97 | 1.95 |
| zeolite phases [wt.-%] | 51° | 33 | 26 | 17 | 2 |
| calcite and quartz [wt.-%] | 16 | 18 | 19 | 8 | 2 |
| feldspars [wt.-%] | 17 | 19 | 21 | 18 | 18 |
| clay and mica [wt.-%] | 9 | 8 | 9 | 5 | 0 |
| amorphous [wt.-%] | 7 | 22 | 25 | 51 | 65 |
| sinter phases [wt.-%] | - | - | - | 2 | 13 |
| * 20 wt.-% analcime, 18 wt.-% heulandite, 14 wt.-% clinoptilolite | | | | | |

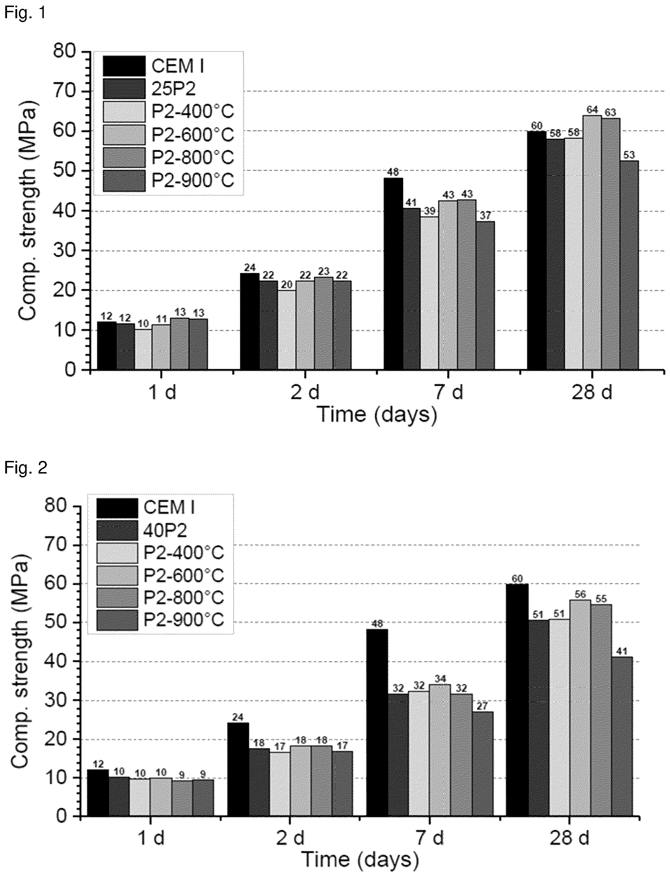

The compressive strength of composite cements comprising 25 wt.-% and 40 wt.-% of the zeolite and CEM I are presented in figures 1 and 2 . CEM I is included for comparison. Strength was measured on standard mortar prisms according to EN 196-1. As can be seen from figure 1 , an addition of 25 wt.-% zeolite calcined at 600 or 800 °C allowed early strengths at 1 and 2 days comparable to that of CEM I. The strength at 28 days exceeded that of CEM I, i.e., an additional reduction of the clinker content is possible. In figure 2 a higher clinker replacement of 40 wt.-% zeolite was used. Here the early strength was lower than for CEM I, but at 28 days the composite cement still achieved a strength as required by the standard. This demonstrates that calcined zeolite is able to provide composite cements with a high clinker replacement of 40 wt.-%.

### Example 2

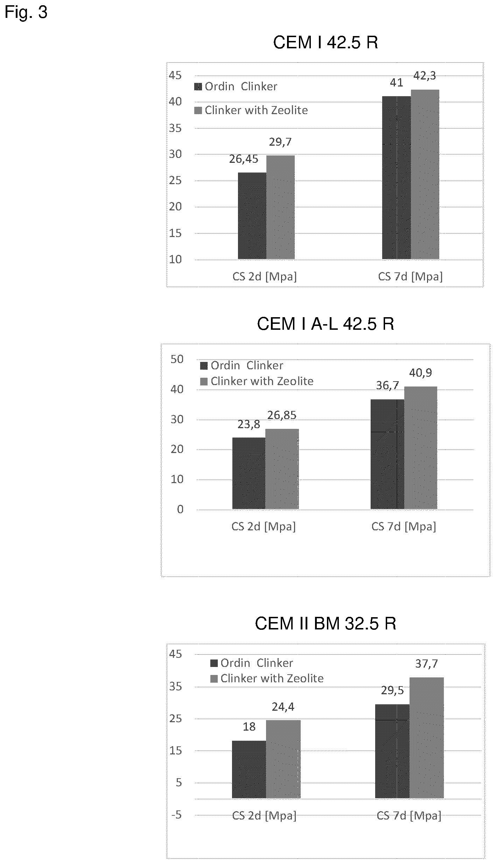

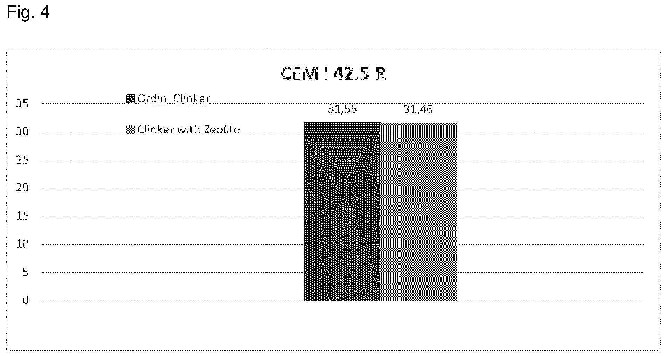

In a long-term industrial experiment, 8 wt.-% zeolite with respect to the clinker weight were added to the clinker cooler. Different composite cements were made, a CEM I with only the 8 wt.-% zeolite, a CEM I A-L with the 8 wt.-% zeolite and 10 wt.-% limestone and a CEM II BM with the 8 wt.-% zeolite and 30 wt.-% limestone. Figure 3 shows the compressive strength determined according to EN 196-1 on mortar prisms after 2 and 7 days. Figure 4 shows the water demand. It is apparent that the compressive strength after 2 and 7 days hardening was higher than that of the same cement without the 8 wt.-% zeolite addition to the clinker cooler. Furthermore, the workability of the standard mortar is not negatively impacted by the calcined pozzolana.

## Claims

1. Method for manufacturing a composite cement comprising the steps:
• providing a cement raw meal,
• preheating the cement raw meal to provide preheated cement raw meal,
• precalcination of the preheated cement raw meal to provide precalcined cement raw meal,
• sintering the precalcined cement raw meal in a rotary kiln to provide the cement clinker, and
• cooling the cement clinker in a cooler,
wherein
a zeolite is added with a gas tight valve to the clinker in the cooler at a position where the temperature of the clinker causes a heating of the added zeolite to a temperature in the range from 600 to 800 °C, with feeding and dosage of the zeolite being accomplished by a transport device with mass flow sensor and the gas tight valve, which has two flaps of which only one is open at a time such that
• while an upper flap is open, zeolite enters the valve,
• after closing the upper flap, the lower flap opens, and the zeolite falls down onto the clinker travelling in the cooler,
• then the lower flap closes, and
• the cycle is repeated.

2. Method according to claim 1, wherein
a size of the zeolite is adjusted to a D90 of 100 mm, preferably a D90 of 50 mm, most preferred a D90 of 30 mm, and/or a D10 of at least 1 mm, preferably of at least 5 mm, most preferred at least 10 mm.

3. Method according to claim 1 or 2, wherein
the zeolite is analcime, chabazite, clinoptilolite, heulandite, natrolite, phillipsite, stilbite or mixtures of two or more thereof, and optionally comprises other mineral phases like quartz, feldspar, clay minerals, mica, calcite and/or impurities like metals.

4. Method according to claim 3, wherein
the amount of non-zeolite components, in form of other mineral phases like quartz, feldspar, clay minerals, mica, calcite and/or impurities like metals, is below 60 wt.-%, more preferred below 55 wt.-% and most preferred below 50 wt.-% with respect to the total zeolite material added.

5. Method according to one of claims 1 to 4, wherein
the zeolite has a Si/AI molar ratio below 3, preferably from 1 to 3.

6. Method according to one of claims 1 to 5, wherein
the zeolite is added in an amount ranging from 1 to 60 wt.-% with respect to the clinker weight, preferably from 5 to 30 wt.-%, most preferred from 7 to 15 wt-%.

7. Method according to one of claims 1 to 6, wherein
amount and point of addition of the zeolite are adjusted to obtain a reduction of the BET surface area of the zeolite of at least 5 %, preferably of at least 10 %, most preferred of at least 15 %.

8. Method according to one of the claims 1 to 7, wherein
the cement clinker is selected from Portland cement clinker, calcium sulfoaluminate cement clinker, or calcium aluminate cement clinker, preferably Portland cement clinker.

9. Method according to one of claims 1 to 8, wherein
one or more additives, especially pigments, fibers, mineral fillers, reinforcing elements, self-healing agents, and mixtures of two or more thereof, are added.

10. Method according to one of claims 1 to 9, wherein
one or more supplementary cementitious material, especially fly ash, ground granulated blast furnace slag, carbonated recycled concrete fines, calcined clay, hyaloclastite, and mixtures of two or more thereof, are added.

## Patentansprüche

1. Verfahren zum Herstellen eines Kompositzements, umfassend die Schritte:
• Bereitstellen eines Zementrohmehls,
• Vorerhitzen des Zementrohmehls, um vorerhitztes Zementrohmehl bereitzustellen,
• Vorkalzinieren des vorerhitzten Zementrohmehls, um vorkalziniertes Zementrohmehl bereitzustellen,
• Sintern des vorkalzinierten Zementrohmehls in einem Drehofen, um den Zementklinker bereitzustellen, und
• Kühlen des Zementklinkers in einem Kühler,
wobei
ein Zeolith über ein gasdichtes Ventil in einer Position zu dem Klinker in dem Kühler gegeben wird, bei der die Temperatur des Klinkers ein Erwärmen des zugegebenen Zeolithen auf eine Temperatur im Bereich von 600 bis 800 °C bewirkt, wobei die Zuführung und Dosierung des Zeolithen erzielt wird durch eine Transportvorrichtung mit Massenflusssensor und das gasdichte Ventil, das zwei Klappen aufweist, von denen zu jeder Zeit nur eine offen ist, sodass
• während eine obere Klappe offen ist, Zeolith in das Ventil eintritt,
• die untere Klappe sich nach dem Schließen der oberen Klappe öffnet und der Zeolith auf den sich im Kühler bewegenden Klinker hinabfällt,
• die untere Klappe sich anschließend schließt und
• der Zyklus wiederholt wird.

2. Verfahren nach Anspruch 1, wobei
eine Größe des Zeolithen auf einen D90-Wert von 100 mm, vorzugsweise einen D90-Wert von 50 mm, ganz besonders bevorzugt einen D90-Wert von 30 mm, und/oder einen D10-Wert von wenigstens 1 mm, vorzugsweise wenigstens 5 mm, ganz besonders bevorzugt wenigstens 10 mm, eingestellt wird.

3. Verfahren nach Anspruch 1 oder 2, wobei
der Zeolith Analcim, Chabazit, Clinoptilolit, Heulandit, Natrolit, Phillipsit, Stilbit oder Gemische von zwei oder mehr davon ist und gegebenenfalls andere mineralische Phasen wie Quarz, Feldspat, Tonmineralien, Glimmer, Kalzit und/oder Verunreinigungen wie Metalle umfasst.

4. Verfahren nach Anspruch 3, wobei
die Menge an Nicht-Zeolithkomponenten in Form von anderen Mineralphasen wie Quarz, Feldspat, Tonmineralien, Glimmer, Kalzit und/oder Verunreinigungen wie Metallen unter 60 Gew.-%, besonders bevorzugt unter 55 Gew.-% und ganz besonders bevorzugt unter 50 Gew.-% in Bezug auf das zugegebenen Gesamtzeolithmaterial liegt.

5. Verfahren nach einem der Ansprüche 1 bis 4, wobei
der Zeolith ein Si/Al-Molverhältnis unter 3, vorzugsweise von 1 bis 3, aufweist.

6. Verfahren nach einem der Ansprüche 1 bis 5, wobei
der Zeolith in einer Menge im Bereich von 1 bis 60 Gew.-% in Bezug auf das Klinkergewicht zugegeben wird, vorzugsweise von 5 bis 30 Gew.-%, ganz besonders bevorzugt von 7 bis 15 Gew.-%.

7. Verfahren nach einem der Ansprüche 1 bis 6, wobei
Menge und Zeitpunkt der Zugabe des Zeolithen derart angepasst werden, dass eine Reduktion der BET-Oberfläche des Zeolithen von wenigstens 5 %, vorzugsweise wenigstens 10 %, ganz besonders bevorzugt wenigstens 15 %, erzielt wird.

8. Verfahren nach einem der Ansprüche 1 bis 7, wobei
der Zementklinker aus Portland-Zementklinker, Calciumsulfoaluminat-Zementklinker oder Calciumaluminat-Zementklinker, vorzugsweise Portland-Zementklinker, ausgewählt ist.

9. Verfahren nach einem der Ansprüche 1 bis 8, wobei
ein oder mehrere Additive, insbesondere Pigmente, Fasern, Mineralfüllstoffe, Verstärkungselemente, Selbstheilungsmittel und Gemische von zwei oder mehr davon zugegeben werden.

10. Verfahren nach einem der Ansprüche 1 bis 9, wobei
ein oder mehrere ergänzende Zementmaterialien, insbesondere Flugasche, gemahlene granulierte Hochofenschlacke, karbonisierte zurückgewonnene Betonfeinstoffe, kalzinierter Ton, Hyaloklastit und Gemische von zwei oder mehr davon zugegeben werden.

## Revendications

1. Procédé de fabrication d'un ciment composite, comprenant les étapes suivantes :
• fourniture d'une farine crue de ciment,
• préchauffage de la farine crue de ciment pour obtenir une farine crue de ciment préchauffée,
• précalcination de la farine crue de ciment préchauffée pour obtenir une farine crue de ciment précalcinée,
• frittage de la farine crue de ciment précalcinée dans un four rotatoire pour obtenir le clinker de ciment et
• refroidissement du clinker de ciment dans un refroidisseur,
où
une zéolithe est ajoutée au clinker dans le refroidisseur par le biais d'une valve étanche aux gaz à une position à laquelle la température du clinker entraîne un chauffage de la zéolithe ajoutée à une température dans la plage de 600 à 800 °C, l'alimentation en zéolithe et son dosage étant accomplis par un dispositif de transport pourvu d'un débitmètre massique et de la valve étanche aux gaz, qui possède deux volets parmi lesquels un seulement est ouvert à un moment donné de sorte que
• quand le volet supérieur est ouvert, la zéolithe passe dans la valve,
• une fois le volet supérieur fermé, le volet inférieur s'ouvre et la zéolithe tombe sur le clinker acheminé dans le refroidisseur,
• puis le volet inférieur se ferme et
• le cycle est répété.

2. Procédé selon la revendication 1, où
une distribution granulométrique de la zéolithe est ajustée à un D90 de 100 mm, préférablement à un D90 de 50 mm, le plus préférablement à un D90 de 30 mm et/ou à un D10 d'au moins 1 mm, préférablement d'au moins 5 mm, le plus préférablement d'au moins 10 mm.

3. Procédé selon la revendication 1 ou 2, où
la zéolithe est l'analcime, la chabazite, la clinoptilolite, l'heulandite, la natrolite, la phillipsite, la stilbite ou des mélanges de deux ou plusieurs de celles-ci, et comprend éventuellement d'autres phases minérales comme le quartz, le feldspath, des minéraux argileux, le mica, la calcite et/ou des impuretés telles que des métaux.

4. Procédé selon la revendication 3, où
la teneur en composants non zéolithiques, sous forme d'autres phases minérales telles que le quartz, le feldspath, des minéraux argileux, le mica, la calcite et/ou des impuretés telles que des métaux, rapportée à la quantité totale du matériau zéolithique ajouté, est inférieure à 60 % en poids, plus préférablement inférieure à 55 % en poids et le plus préférablement inférieure à 50 % en poids.

5. Procédé selon l'une quelconque des revendications 1 à 4, où
le rapport molaire Si/Al de la zéolithe est inférieur à 3 et préférablement dans la plage de 1 à 3.

6. Procédé selon l'une quelconque des revendications 1 à 5, où
la zéolithe est ajoutée à une quantité, rapportée au poids du clinker, dans la plage de 1 à 60 % en poids, préférablement de 5 à 30 % en poids, le plus préférablement de 7 à 15 % en poids.

7. Procédé selon l'une quelconque des revendications 1 à 6, où la quantité et le point d'addition de la zéolithe sont ajustés de manière à obtenir une réduction de l'aire de surface BET de la zéolithe d'au moins 5 %, préférablement d'au moins 10 %, le plus préférablement d'au moins 15 %.

8. Procédé selon l'une quelconque des revendications 1 à 7, où le clinker de ciment est sélectionné parmi le clinker de ciment Portland, un clinker de ciment à base de sulfoaluminate de calcium ou un clinker de ciment à base d'aluminate de calcium, et correspond préférablement au clinker de ciment Portland.

9. Procédé selon l'une quelconque des revendications 1 à 8, où sont ajoutés un ou plusieurs additifs, en particulier les suivants : pigments, fibres, matières de remplissage minérales, éléments renforçants, agents auto-cicatrisants et mélanges de deux ou plusieurs de ceux-ci.

10. Procédé selon l'une quelconque des revendications 1 à 9, où sont ajoutés un ou plusieurs matériaux cimentaires supplémentaires, en particulier les suivants : cendres volantes, laitiers de haut-fourneau broyés et granulés, fines de béton carbonatées recyclées, argile calcinée, hyaloclastite et mélanges de deux ou plusieurs de ceux-ci.
